# EUROPÄISCHE PATENTSCHRIFT

(11) **EP 0 639 877 B1**
(45) Veröffentlichungstag und Bekanntmachung des Hinweises auf die Patenterteilung: **29.01.1997**
(21) Anmeldenummer: 94112604.7
(22) Anmeldetag: 12.08.1994
(51) Int. Cl.: H02B 1/20, H02G 5/04

(54) **Vorrichtung zum Zuführen elektrischer Energie zu wenigstens einem elektrischen Installationsgerät**
Device for supplying at least one electric installation appliance with electric energy
Dispositif pour alimenter en énergie électrique au moins un appareil d'installation électrique

(30) Priorität: 18.08.1993 DE 4327715
(43) Veröffentlichungstag der Anmeldung: 22.02.1995
(73) Patentinhaber: ABB PATENT GmbH, D-68309 Mannheim (DE)
(72) Erfinder: Leible, Erwin, D-69434 Hirschhorn (DE)
(74) Vertreter: Rupprecht, Klaus, Dipl.-Ing.

(56) Entgegenhaltungen:
- DE-A- 2 843 858
- DE-A- 4 021 825
- GB-A- 1 120 649
- GB-A- 2 247 351
- US-A- 5 046 172

## Beschreibung

Die Erfindung betrifft eine Vorrichtung zum Zuführen elektrischer Energie zu wenigstens einem Installationsgerät gemäß den Oberbegriffen der Ansprüche 1 und 6.

Derartige Vorrichtungen sind aus der DE-OS 28 43 858 bekannt. Die dort beschriebenen Sammelschienen sind durch Flachschienen gebildet, die parallel zur Längserstrekkung der Hutprofilschiene, auf die die Leitungsschutzschalter aufgeschnappt sind, und senkrecht zu der durch die Schenkel der Hutprofilschiene aufgespannten Ebene ausgerichtet sind, wobei die drei Flachschienen bezogen auf die Hutprofilschiene in dieser Ebene hintereinander angeordnet sind. Zur elektrisch leitenden Verbindung zu den Leitungsschutzschaltern sind Anschlußlitzen vorgesehen, an deren einem Ende ein Steckelement, das über die einzelnen Schienen gesteckt wird, und an deren anderem Ende eine Anschlußfahne vorgesehen ist, welch letztere unter die Anschlußklemme des betreffenden Leitungsschutzschalters festklemmbar ist. Die einzelnen Flachschienen sind in einzelne Gehäuseelemente eingesetzt, und die Gehäuseelemente werden zur Bildung der gesamten Sammelschienenanordnung formschlüssig miteinander verbunden. Aufgrund des zusätzlichen Litzenteils ist die Montage verhältnismäßig aufwendig.

Aus der EP 0 229 590 B1 ist eine Niederspannungsverteilung bekannt geworden, die an einer Sammelschiene lösbar angeschlossene Installationseinbaugeräte, ein Sammelschienensystem und Mittel zur Einspeisung der Sammelschienen aufweist. Die einzelnen Installationseinbaugeräte sind mit einem Steckkontaktteil ausgerüstet, mit dem sie mit einer Sammelschiene in Kontaktierung bringbar sind, wobei ein Fixierungselement vorgesehen ist, mittels dem jedes Installationseinbaugerät, z. B. ein Leitungsschutzschalterpol, fixierbar ist. Die Steckklemmen sind tulpenartig ausgebildet, die je nach Stromentnahme abhängig von jeder einzelnen Phase an der Unterseite des Gerätes justiert werden müssen. Von der Tulpenklemme zur Geräteklemme ist eine Litze erforderlich und insgesamt erfordert das Justieren vom Installateur einen beachtlichen Arbeitsaufwand.

Aus der WO 94/08375 und WO 94/08376 ist je eine Vorrichtung der eingangs genannten Art bekannt geworden, bei der innerhalb eines Gehäuses drei Phasenschienen untergebracht sind, die mit Installationsgeräten in Verbindung bringbar sind, die mit daran angeordneten Anschlußelementen Öffnungen im Gehäuse hin zu den Anschlußfahnen der Phasenschienen durchgreifen. Bei der bekannten Anordnung sind alle drei Phasenschienen in einer Ebene, wobei die beiden äußeren Phasenschienen an ihren aufeinanderzuweisenden Kanten mit aus der Ebene der Phasenschienen heraus abgekröpften Anschlußfahnen versehen sind. Die dritte Phasenschiene 30 befindet sich in der gleichen Ebene wie die beiden anderen Phasenschienen und ist mit C-förmigen Anschlußfahnen versehen, die in der Ebene der Anschlußfahnen der beiden anderen Sammelschienen liegen.

Aus der GB-A 1 120 649 ist eine Vorrichtung bekannt geworden, bei der drei Phasenschienen in einer Ebene untergebracht sind; an den außenliegenden Phasenschienen sind Anschlußfahnen festgeschraubt, die senkrecht dazu in eine Ebene abgekröpft sind, die parallel zu der Ebene der Phasenschienen verläuft. An den Anschlußfahnen sind U-förmige Anschlußkontaktstücke vorgesehen, mit denen Anschlußelemente an den Installationsgeräten in Verbindung bringbar sind. Das U-förmige Anschlußkontaktstück der mittleren Sammelschiene besitzt längere Schenkel, damit erreicht wird, daß die freien Endkanten aller Kontaktstücke in einer Ebene liegen.

Aus der US 5 046 172 ist eine Vorrichtung der eingangs genannten Art bekannt geworden, bei der Phasenschienen parallel zueinander vorgesehen sind, die mit Anschlußkontaktstücken an einer Haltevorrichtung für die Installationsgeräte in Verbindung bringbar sind. Anschlußfahnen sind an den Sammelschienen sind an den Sammelschienen nicht vorgesehen.

Aufgabe der Erfindung ist es, eine Vorrichtung der eingangs genannten Art zu schaffen, bei der mit verringertem Installationsaufwand und sichergestelltem Berührungsschutz eine kompakte Ausgestaltung erzielt wird.

Diese Aufgabe wird erfindungsgemäß gelöst durch die Merkmale des Anspruches 1.

Erfindungsgemäß also sind wenigstens die als Flachbandleiter ausgebildeten Phasenschienen wenigstens zweier Phasen parallel zueinander übereinander in zwei unterschiedlichen Ebenen angeordnet; sie liegen isoliert voneinander im Gehäuse. Die Anschlußfahnen aller Phasenschienen liegen in einer gemeinsamen Ebene und in einer gemeinsamen Linie und die Phasenschienen sind mit ihren Anschlußfahnen vom Gehäuse umgeben, wobei im Gehäuse Öffnungen vorgesehen sind, durch die hindurch an den Installationsgeräten angebrachte Anschlußelemente Zugang zu den Anschlußfahnen erhalten.

Die Phasenschienen zweier Phasen können dabei übereinander in zwei Ebenen und die der dritten Phase zugehörige Phasenschiene, von den anderen ebenfalls isoliert, in der Ebene der ersten oder zweiten Phasenschiene angeordnet sein. Die an allen Phasenschienen angebrachten Anschlußfahnen liegen ebenfalls in einer allen gemeinsamen Ebene und ihre Endkanten in einer allen gemeinsamen Linie.

Gemäß einer weiteren Ausgestaltung der Erfindung können die als Flachbandleiter ausgebildeten Phasenschienen aller Phasen übereinander und parallel zueinander voneinander isoliert im Gehäuse angeordnet sein; an wenigstens einer Längskante, bevorzugt an beiden, sind senkrecht zur jeweiligen Flachbandleiterebene abgebogene Anschlußfahnen vorgesehen, die wiederum in jeweils einer Ebene liegen und deren Endkanten auf je einer Linie liegen, wobei im Gehäuse Öffnungen vorgesehen sind, durch die hindurch an den Installationsgeräten angebrachte Anschlußelemente Zugang zu den Anschlußfahnen erhalten.

Eine dritte Ausgestaltung der Erfindung kann dahin gehen, daß zwei Phasenschienen mit ihrer Flachbandleiterebene für je eine Phase parallel zueinander übereinander angeordnet sind, wogegen die dritte Phasenschiene mit ihrer Flachbandleiterebene senkrecht dazu ausgerichtet ist. Die an allen Phasenschienen angebrachten Anschlußfahnen liegen in einer allen gemeinsamen Ebene und ihre Endkanten in einer allen gemeinsamen Linie und die Phasenschienen sind mit ihren Anschlußfahnen vom Gehäuse umgeben, wobei im Gehäuse Öffnungen vorgesehen sind, durch die hindurch an den Installationsgeräten angebrachte Anschlußelemente Zugang zu den Anschlußfahnen erhalten.

Die einzelnen Phasenschiene, ebenso wie eine Nulleiterphasenschiene können innerhalb eines Gehäuses untergebracht werden, wobei gleichzeitig auch die Anschlußfahnen im Gehäuse vorgesehen und über Öffnungen im Gehäuse für Anschlußelemente an den Leitungsschutzschaltern zugänglich sind. Da darüberhinaus auch die Anschlußfahnen in einer Reihe hintereinander angeordnet sind, gleichgültig, ob die Anschlußfahnen L-förmig oder rechteckförmig mit einer entsprechenden Ausnehmung ausgebildet sind, sind Justierarbeiten der Anschlußelemente an den Installationsgeräten nicht mehr nötig.

Eine weitere Vorrichtung gemäß dem unabhängigen Anspruch 6 ist dadurch gekennzeichnet, daß die als Flachbandleiter ausgebildeten Phasenschienen parallel zueinander und isoliert voneinander im Gehäuse untergebracht sind, wobei wenigstens zwei der Phasenschienen in einer ersten Ebene liegen; die Anschlußfahnen aller Phasenschienen liegen in einer zweiten Ebene und besitzen Ausnehmungen zur Kontaktierung mit an den Installationsgeräten angebrachten Anschlußelementen. Die Ausnehmungen in den Anschlußfahnen wenigstens zweier Phasenschienen liegen in einer parallel zur Längserstreckung der Phasenschienen verlaufenden ersten Linie.

Dabei können die Öffnungen oder Ausnehmungen in den Anschlußfahnen einer dritten Phasenschiene auf einer parallel zur ersten Linie verlaufenden zweiten Linie liegen.

Gemäß Anspruch 8 kann das Gehäuse im Querschnitt eine Rechteckform aufweisen und in Längsrichtung verlaufende, eine Hutprofilschiene bildende L-förmige Leisten besitzen. Dadurch, daß gleichzeitig am Gehäuse auch die Leisten vorgesehen sind, die eine Hutprofilschiene miteinander bilden, können die mit den Anschlußelementen versehenen Installationsgeräte, die vorzugsweise Leitungsschutzschalter oder Fehlerstromschutzschalter sind, auf die Leisten am Gehäuse aufgeschnappt werden und mit dem Aufschnappvorgang erfolgt gleichzeitig eine Kontaktierung der Leitungsschutzschalter mit den zugehörigen Phasenschienen.

Gemäß einer weiteren Ausgestaltung der Erfindung besitzt das Gehäuse aus isolierendem Material eine L-Form, wobei ein Abschnitt die Phasenschienen und der andere Abschnitt die Leisten trägt, die miteinander die Hutprofilschiene bilden.

In besonders vorteilhafter Weise kann gemäß Anspruch 10 das Gehäuse auf der Seite, auf der sich die Leisten zur Bildung der Hutprofilschiene bilden, Öffnungen aufweisen, durch die die Anschlußfahnen an den Phasenschienen zugänglich sind.

Anstatt einer L-Form kann das Gehäuse auch eine U-Form aufweisen, wobei gemäß Anspruch 11 die Schenkelabschnitte die Phasenschienen aufnehmen und mit Öffnungen versehen sind, durch die Zugang zu den Phasenschienen gewährt ist. Dabei können gemäß Anspruch 12 an der Außenseite des die beiden Schenkelabschnitte des Gehäuses miteinander verbindenden Steges die Leisten vorgesehen sein, die als Hutprofilschiene dienen.

Damit eine vereinfachte Montage möglich ist, können am Installationsgerät gemäß Anspruch 13 im Bodenbereich Anschlußelemente vorgesehen sein, die in die Öffnung einfügbar und mittels denen eine elektrisch leitende Verbindung an den Anschlußfahnen herstellbar ist.

Gemäß einer weiteren Ausgestaltung der Erfindung nach Anspruch 14 können die Anschlußelemente am Installationsgerät zwei in Abstand der Phasenleiterdicke einander zugeordnete Fahnenelemente aufweisen, die bei Kontaktierung mit den Phasenschienen die Anschlußfahnen an den Phasenschienen zwischen sich nehmen.

In weiterer Ausgestaltung können die Anschlußelemente an den Installationsgeräten durch eine V-förmige Anschlußfahne gebildet sein, die in die Öffnungen an den rechteckförmigen Anschlußfahnen der Flachbandleiter einsteckbar sind.

Gemäß einer weiteren Ausgestaltung der Erfindung kann parallel zu den Anschlußfahnen an den Phasenleitern eine vierte Phasenschiene zugeordnet sein, die in einem Abstand von den Anschlußfahnen verläuft.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine perspektivische Ansicht auf eine erfindungsgemäße Vorrichtung,
- Fig. 2 und 3: zwei unterschiedliche Anordnungen von Phasenschienen,
- Fig. 4: eine perspektivische Ansicht auf eine weitere Ausgestaltung der Erfindung,
- Fig. 5: eine Teilansicht eines Leitungsschutzschalters,
- Fig. 6: eine weitere Ausführungsform von einer Sammelschienenanordnung, wobei lediglich die Schienen dargestellt sind,
- Fig. 7: eine perspektivische Variante zu Fig. 1 erweiterter Funktion,
- Fig. 8: die entsprechenden Sammelschienen und
- Fig. 9: eine perspektivische Ansicht einer Anschlußlitze.

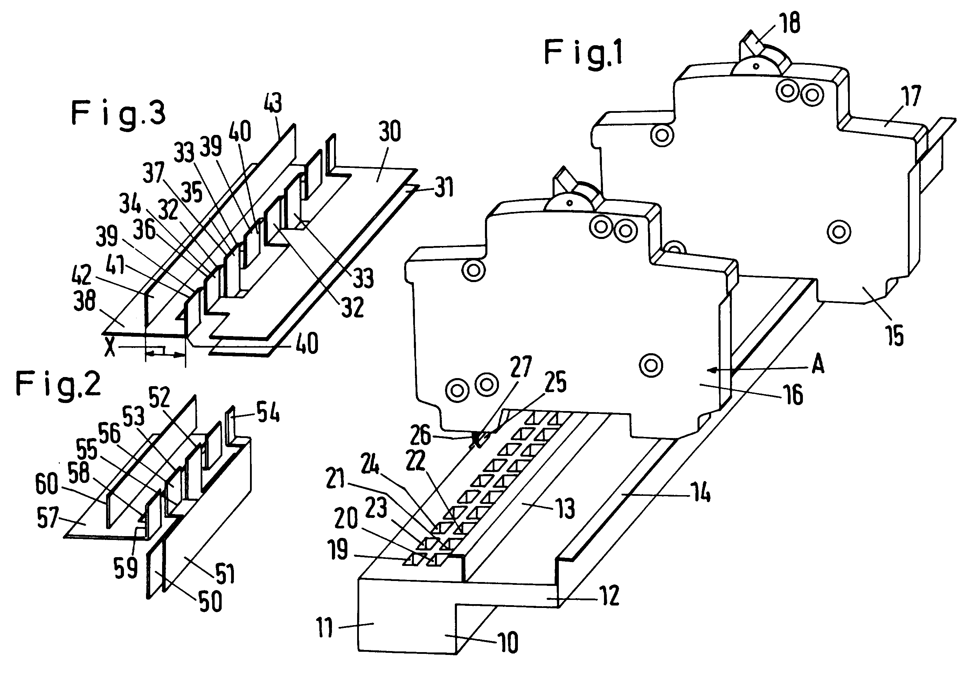

Es sei nun Bezug genommen auf die Fig. 1.

Die Vorrichtung umfaßt ein Gehäuse 10, welches eine L-Form mit einem ersten Schenkel 11 und einem zweiten Schenkel 12 aufweist, wobei auf der Außenfläche des zweiten Schenkels 12 zwei ebenfalls L-förmig verlaufende Leisten 13 und 14 angeformt sind, die parallel zueinander verlaufen und deren Schenkel voneinander wegweisen; die beiden Leisten 13 und 14 besitzen einen solchen Abstand voneinander, daß sie den Abmessungen einer Hutprofilschiene entsprechen. Auf diese Hutprofilschiene 13, 14 ist ein Leitungsschutzschalter 15 aufgeschnappt; ein weiterer Leitungsschutzschalter 16 ist vor dem Leitungsschutzschalter 15 oberhalb der Hutprofilschiene 13, 14 schwebend dargestellt. Die beiden Leitungsschutzschalter sind handelsübliche Leitungsschutzschalter, an deren Frontseite 17 ein Schaltknebel 18 angeordnet ist.

Die Leiste 13 der Hutprofilschienenanordnung liegt etwa im mittleren Bereich des Schenkels 12 und außerhalb des Bereiches der Hutprofilschiene 13, 14 sind Öffnungen 19, 20, 21, 22, 23, 24... angeordnet, die eine rechteckige Form besitzen, wobei die Öffnungen 20, 21 und 22 in Richtung der Längserstreckung des Gehäuses 10 in einer Reihe angeordnet sind und parallel zu der Reihe der Öffnungen 19, 23, 24... verlaufen.

Wenn der Leitungsschutzschalter 16 auf die Hutprofilschiene 13/14 aufgeschnappt ist, wird ein aus dem Leitungsschutzschalter auf der der Frontseite 17 entgegengesetzten Bodenseite herausragendes Anschlußelement 25 (auch Kontaktelement 25 genannt), in eine der Öffnungen 19 bis 24 eingreifen und mit einer darin angeordneten Phasenschiene in Kontakt gelangen. Das Kontaktelement 25 ist aus zwei Federelementen 26, 27 aufgebaut, deren Abstand voneinander so gewählt ist, daß sie federnd gegen die im Gehäuse 10 befindlichen Phasen- oder Sammelschienen drücken. Im Inneren des Leitungsschutzschalters stehen die Federelemente 26, 27 mit den Leitungsschutzschalterkomponenten in Verbindung; im Bereich A des Leitungsschutzschalters 16, ebenso wie im Schutzschalter 15, befinden sich Anschlußklemmen zum Anschluß von zu Verbrauchern führenden Leitungen.

Innerhalb des Schenkels 11 des Gehäuses 10 befinden sich Phasenschienen, wie sie beispielsweise in Fig. 3 dargestellt sind. Die Phasenschienen sind als Flachbänder ausgebildet und zur Bildung einer Phasenschienenanordnung sind zwei Phasenschienen 30 und 31, im folgenden auch Flachschiene 30, 31 genannt, übereinander angeordnet und innerhalb des Schenkels 11 voneinander isoliert. An einer der Seitenkanten besitzen beide Phasenschienen L-förmige Anformungen 32 und 33, deren als Anschlußfahnen dienende, freie Schenkel 34, 35 in einer Ebene liegen, die senkrecht zu je einer durch die Phasenschienen 30, 31 aufgespannten Ebene verlaufen. Die Endkanten 36, 37 der Schenkel 34 und 35 liegen in einer Linie, die in geeignetem Abstand zu der Ebene der Phasenschiene 30 bzw. 31 angeordnet ist.

In der Ebene, in der sich die Flachschiene 31 befindet, ist eine weitere Flachschiene 38 vorgesehen, an deren zu den mit den Anschlußfahnen 34, 35... hinweisenden Kante weitere, ebenfalls L-förmige Anformungen 39 angeformt sind, deren als Anschlußfahnen dienende Schenkel 40 ebenfalls in der Ebene der Schenkel 34 und 35 liegen und deren Endkante 41 mit der durch die Endkanten 36, 37 gebildeten Linie fluchten. Die Anformungen 39 der Flachschiene 38 nehmen die Anformungen 32 und 33 zwischen sich, so daß jeweils eine Anschlußfahne 40, eine Anschlußfahne 34, eine Anschlußfahne 35 und wieder eine Anschlußfahne 40 usw. folgen.

In einem Abstand X von den Anschlußfahnen 40, 34, 35 Anformungen 39, 32 und 33 ist eine senkrecht zur Flachschiene 38 verlaufende weitere Flachschiene 42 angeordnet, die von der Flachschiene 38 isoliert in dem Abschnitt bzw. Schenkel 11 angeordnet ist. Die obere, der Flachschiene 38 entgegengesetzt liegenden Kante 43 der Flachschiene 42 verläuft parallel zu der durch die Kanten 41, 36... gebildeten Linie und in dem gleichen Abstand von der Flachschiene 38 wie die Länge der Schenkel 40, 34 und 35.

Im montierten Zustand, wenn die Leitungsschutzschalter 15, 16 auf die Hutprofilschiene 13, 14 aufgeschnappt sind, wird jeweils ein Leitungsschutzschalter mittels seiner Anschlußelemente 25 mit den Anschlußfahnen 40, 34, 35... kontaktiert, wobei dadurch eine dreiphasige Anordnung gebildet ist. Die Anschlußfahnen 40, 34, 35... befinden sich dabei im Bereich der Öffnungen 20, 21 und 22 und die Flachschiene 42 unterhalb der Öffnungen 19, 23, 24.

Die Anordnung gemäß Fig. 2 kann ebenfalls bei dem Gehäuse 10 im Bereich des Schenkels 11 angeordnet bzw. eingesetzt werden. Dort sind zwei parallel zueinander verlaufende Flachschienen 50, 51 vorgesehen, die senkrecht zu der durch die Schenkel der Hutprofilschiene 13, 14 aufgespannten Ebene verlaufen, also auch senkrecht zu dem Schenkel 12 des Gehäuses 10. Selbstverständlich sind beide Flachschienen 50, 51 voneinander isoliert.

An der Flachschiene 50 sind Anschlußfahnen 52 angeformt, die in der Ebene des Flachleiters 50 liegen. An der Flachschiene 51 sind Anschlußfahnen 53, 54 angeformt, die eine L-Form besitzen, wobei der an der Flachschiene 51 anschließende erste Schenkel 55 senkrecht zu der durch die Flachschiene 51 gebildeten Ebene und der Schenkel 56 parallel dazu verläuft, wobei der Schenkel 56 in der Ebene liegt, in der sich die Flachschiene 50 befindet. Senkrecht zu der Ausrichtung der Flachschiene 50 und 51 ist eine weitere Flachschiene 57 vorgesehen, die an ihrer freien Kante L-förmige Anschlußfahnen 58 aufweist, deren Schenkel 59 in der durch die Schenkel 56, die Anschlußfahne 52... aufgespannten Ebene liegt. Die freie Endkante der Anschlußfahne 58 liegt in der Linie, die durch die freien Endkanten der Anschlußfahnen 52 und 53, 54 gebildet sind.

Senkrecht zu der Flachschiene 57 und parallel und in Abstand zu den Flachschienen 50 und 51 ist eine vierte Flachschiene 60 vorgesehen, dessen Abstand von den Schenkeln 59, 56... genau wie die Flachschiene 42 von den Anschlußfahnen 40, 34, 35 den Abstand X aufweist. Im montierten Zustand, wenn also die Anordnung nach Fig. 2 in dem Gehäuse 10 untergebracht ist, befindet sich die Flachschiene 60 unterhalb der Öffnungen 19, 23, 24 und die Anschlußfahnen 58... unter den Öffnungen 20, 21 und 22. Die Wirkungsweise ist dabei die gleiche wie die der Fig. 3. Selbstverständlich ist das Gehäuse auch hierfür geeignet, die einzelnen Flachschienen voneinander elektrisch zu isolieren und innerhalb des Gehäuses 10 festzulegen. Dabei kann das Gehäuse 10 zwei- oder mehrgeteilt sein. Es besteht andererseits auch die Möglichkeit, die Flachschienen der Fig. 2 und 3 in ein Gehäuse 10 einzugießen.

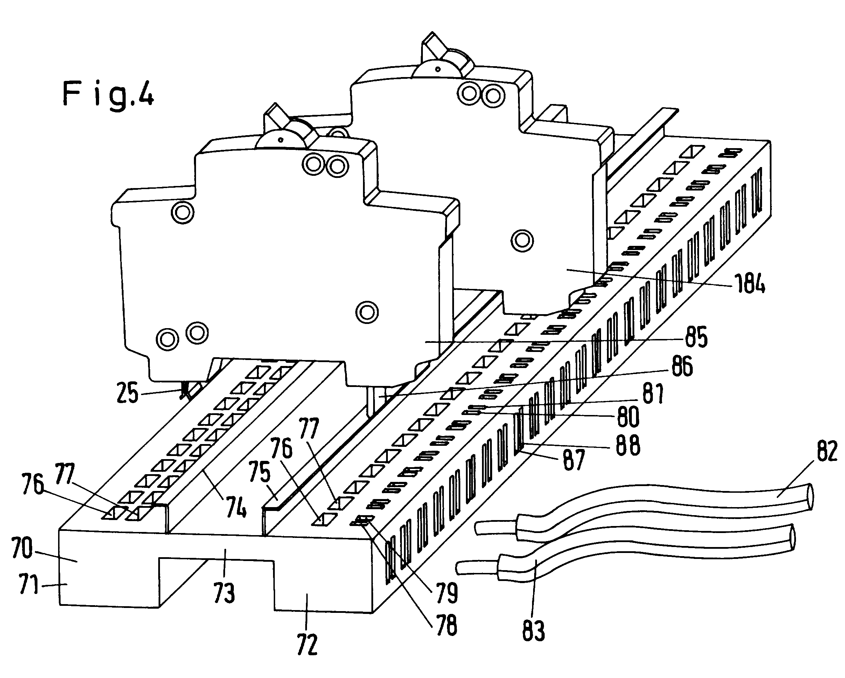

Die Fig. 4 zeigt eine weitere Ausführungsform der Erfindung. Dabei ist das Gehäuse 70, in dem sich die einzelnen Flachschienen der Fig. 2 und 3 befinden, U-förmig, mit zwei parallel zueinander verlaufenden, die Flachschienen gemäß Fig. 2 oder Fig. 3 aufnehmenden Gehäuseabschnitt 71 und einen parallel dazu verlaufenden Gehäuseabschnitt 72, die beide durch einen Steg 73 miteinander verbunden sind, wobei der Steg 73 mit dem Gehäuseabschnitt 71 der L-Form des Gehäuses 10 und der Steg 73 mit dem Gehäuseabschnitt 72 der spiegelbildlich ausgerichteten Anordnung des Gehäuses 10 der Fig. 1 entspricht. Oberhalb des Steges 73 befinden sich Leisten 74 und 75, die den Leisten 13 und 14 entsprechen und miteinander eine Hutprofilform bilden.

Man erkennt in der Fig. 4, daß zwei Reihen von Öffnungen 76, 77 und 78, 79; 80, 81 parallel nebeneinander und parallel zur Hutprofilschiene angeordnet sind. Dabei entspricht eine Öffnung 76 einer Doppelöffnung 78, 79...

Auf der senkrecht zu der Ebene des Steges 73 verlaufenden Außenseite der Abschnitte 71 und 72 sind Öffnungen 87, 88 vorgesehen, durch die an den zugehörigen Phasen- oder Flachschienen, wie sie beispielsweise in der Fig. 2 oder 3 dargestellt sind, angeschlossene Anschlußklemmen, nicht näher dargestellt, an denen pro Modul entweder eine oder wie in Fig. 4 dargestellt zwei Abgangsleiter 82, 83 eingesteckt bzw. angeschlossen werden können.

Die beiden Leitungsschutzschalter 84 und 85 sind gegenüber den Leitungsschutzschaltern 15 und 16 insoweit modifiziert, als neben den (mit gleicher Bezugsziffer wie in Fig. 1 bezeichneten) Anschlußelementen 25 eine Anschlußfahne 86 vorgesehen ist, die in eine der Öffnungen 76, 77... einfügbar ist. In den Öffnungen 87 und 88 befindliche Steckklemmen (nicht dargestellt) sind durch die entsprechenden Öffnungen 81 und 80 zugänglich.

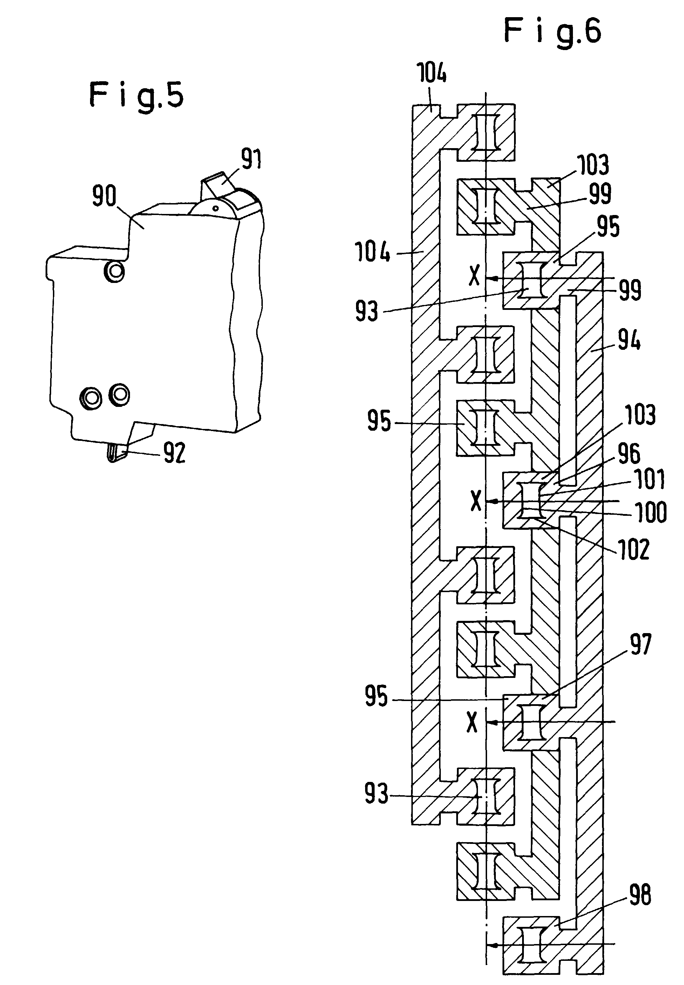

Die Fig. 5 zeigt eine weitere Variante eines Leitungsschutzschalters 90. An dem dem Schaltknebel 91 entgegengesetzten Ende, an dem sich bei dem Leitungsschutzschalter 16 die Anschlußelemente 25, 26, 27 befinden, ist eine V-förmige Anschlußfahne 92 vorgesehen, die in etwa eine Rechteckform aufweisende Öffnungen 93 der Phasenschienen gemäß Fig. 6 einfügbar sind. Die Phasenschienen gemäß Fig. 6 sind Flachbandschienen 94, an denen Anschlußfahnen 95, 96, 97 und 98 angeformt sind, welche eine Rechteckform mit der Öffnung 93 besitzen und mit den zugehörigen Flachbandschienen über Stege 99 verbunden sind. Die sich gegenüberliegenden, parallel zu den Flachbandschienen 94... verlaufenden Kanten 100 bzw. 101 sind in einem solchen Abstand voneinander angeordnet, daß die Anschlußfahne 92 sicher mit beiden Kanten in Kontakt gelangt. Durch Einkerbungen 102 und 103 erhalten die Kanten 101, 100 eine Zungenform und sind dadurch federnd ausgebildet. Ggf. können sie auch aus der durch die Rechteckform der Anschlußfahnen 95 gebildeten Ebene nach unten herausgedrückt werden, so daß das Einführen der Anschlußfahne 92 erleichtert ist.

In einem geeignet ausgebildeten Gehäuse, an dem die Leisten 13, 14 bzw. 74, 75 angeformt sind, sind die einzelnen Flachbandschienen 94, 103 und 104 eingesetzt und voneinander isoliert, wobei dafür zu sorgen ist, daß die rechteckförmigen Anschlußfahnen 95 aller Flachbandschienen sich in einer Ebene befinden. Dies bedeutet, daß beispielsweise die Flachbandschienen 94 und 103 sich in unterschiedlichen Höhen senkrecht zur Zeichenebene befinden, wobei beispielsweise die Flachbandschiene 104 sich in gleicher Höhe befinden kann wie die Flachbandschiene 94. Der Steg 99 bei der Flachbandschiene 94 und die rechteckförmige Anschlußfahne 95 befindet sich mit der Flachbandschiene 94 in einer Ebene, wogegen der dazugehörige Steg 99 Z-förmig abgekröpft ist, damit sich die entsprechenden Anschlußfahnen 95 in gleicher Höhe befinden.

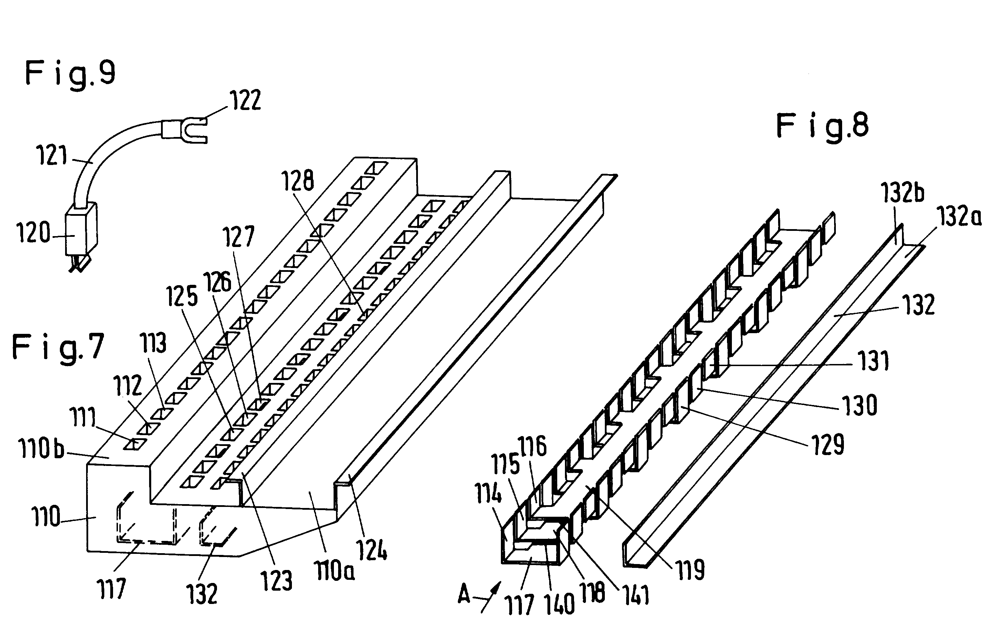

In einem etwa rechteckigen Gehäuse 110 sind in Fig. 8 näher dargestellte Sammelschienen 117, 118, 119 eingesetzt. Das Gehäuse 110 besitzt eine im wesentlichen rechteckige Querschnittsform, wobei auf der Oberseite 110a des Gehäuses 110 an der einen, in der Zeichnung Fig. 7 links befindlichen Längskante eine Leiste 110b angeformt ist, die eine Reihe von Öffnungen 111, 112, 113... aufweist und die gegenüber der Oberseite 110a erhaben ist. An der Oberseite 110a befinden sich auch L-förmige Leisten 123 und 124, von denen die rechts befindliche Leiste an der anderen rechts befindlichen Längskante angeformt ist und beide Leisten 123 und 124 miteinander eine Hutprofilschiene bilden. Zwischen der Leiste 123 und der Leiste 110b befinden sich weitere Öffnungen 125, 126, 127 sowie 128, die hintereinander jeweils zwei parallel zueinander verlaufende Reihen bilden.

Innerhalb des Gehäuses 110 sind die Sammelschienen 117, 118 und 119 untergebracht, siehe Fig. 8, die parallel zueinander und übereinander angeordnet sind. Diese als Flachbandleiter ausgebildten Phasen- oder Sammelschienen besitzen an beiden Längskanten L-förmige Anschlußfahnen 114, 115, 116 bzw. 129, 130, 131, wobei die an jeweils einer Sammelschiene angeformten Anschlußfahnen jeweils in einer Ebene senkrecht zu der Ebene der Flachbandleiter ausgerichtet sind und ihre Enden jeweils in einer Linie liegen, so daß jede Phasenschiene etwa eine U-Form besitzt, wenn in Pfeilrichtung A auf die Sammelschienen gesehen wird.

Zwischen den einzelnen Sammelschienen 117, 118 und 119 befinden sich Isolierelemente 140 und 141, mit denen die Sammelschienen voneinander isoliert sind.

Die Anschlußfahnen 114, 115 und 116 sind durch die Öffnungen 111, 112 und 113 zugänglich, wogegen die Anschlußfahnen 129, 130 und 131 durch die Öffnungen 125, 126 und 127 zugänglich sind.

Neben den Phasenschienen befindet sich eine Nulleiterschiene 132, die eine L-förmige Winkelform aufweist, deren einer Schenkel 132a in der Ebene des Flachbandleiters bzw. der Sammelschiene 117 liegt, wobei der senkrecht dazu verlaufende Schenkel 132b parallel zu den Anschlußfahnen 129, 130, 131 verläuft und die Endkante des Schenkels 132b in der durch die Endkanten der Anschlußfahnen 114, 115, 116 und 129, 130, 131 gebildeten Ebene verläuft. Der Schenkel 132b ist dabei durch die Öffnungen 128 zugänglich.

Auf das Gehäuse 110 kann nun beispielsweise ein Leitungsschutzschalter aufgeschnappt werden, ähnlich wie in Fig. 4 dargestellt ist; es besteht natürlich auch die Möglichkeit, auf dem Gehäuse 110 einen handelsüblichen Leitungsschutzschalter ohne ein Anschlußelement 25 aufzuschnappen. Zu diesem Zweck ist zur Verbindung der einzelnen Leitungsschutzschalter oder Installationsgeräte mit den einzelnen Sammelschienen 117, 118, 119 jeweils eine Litzenleitung 121 erforderlich, deren eines Ende ein Anschlußelement 120 aufweist, welches dem Anschlußelement 25 entspricht, und an deren anderem Ende ein Gabelanschlußteil 122 angebracht ist, das unter eine Anschlußklemme eines entsprechend eingesetzten Installationsgerätes klemmbar ist. Der Litzenleiter 121 wird dann mit seinem Anschlußelement 120 beispielsweise in die Öffnung 111 eingesteckt und kontaktiert darin mit der Anschlußfahne 114.

## Patentansprüche

1. Vorrichtung zum Zuführen elektrischer Energie zu wenigstens einem elektrischen Installationsgerät (15, 16; 85, 184) in einer Installationsanlage, vorzugsweise in einer Hausinstallationsanlage, mit den einzelnen Phasen zugeordneten, als Flachbandleiter ausgebildeten und mit Anschlußfahnen (32, 33, 35; 56, 54; 114, 115, 116; 129, 130, 131) an mindestens einer Längskante versehenen Phasenschienen (30, 31, 38; 50, 51, 57; 117, 118, 119), die mit wenigstens einem der der jeweiligen Phase zugehörigen Installationsgeräte (15, 16; 85, 184) phasenweise verbindbar sind, wobei die einzelnen Phasenschienen (30, 31, 38; 50, 51, 57; 117, 118, 119) in einem Gehäuse (10, 70, 110) oder Block aus isolierendem Material untergebracht sind, dadurch gekennzeichnet, daß die als Flachbandleiter ausgebildeten Phasenschienen (30, 31, 38; 50, 51, 57, 117, 118, 119) wenigstens zweier Phasen parallel zueinander, übereinander in zwei unterschiedlichen Ebenen und voneinander isoliert im Gehäuse (10, 70, 110) angeordnet sind, daß die Anschlußfahnen (32, 33, 35; 56, 54; 114, 115, 116; 129, 130, 131) aller Phasenschienen in einer gemeinsamen Ebene und ihre freien Endkanten in einer gemeinsamen Linie liegen, wobei im Gehäuse Öffnungen (19, 20,...) vorgesehen sind, durch die hindurch an den Installationsgeräten (15, 16; 85, 184) angebrachte Anschlußelemente (25, 26) Zugang zu den Anschlußfahnen (32, 33, 35; 56, 54; 114, 115, 116; 129, 130, 131) erhalten.

2. Vorrichtung nach Anspruch 1, dadurch gekennzeichnet, daß eine erste und eine zweite Phasenschiene übereinander in zwei Ebenen und die dritte Phasenschiene in der Ebene der ersten oder zweiten Phasenschiene angeordnet ist.

3. Vorrichtung nach Anspruch 1, dadurch gekennzeichnet, daß die als Flachbandleiter ausgebildeten Phasenschienen (117, 118, 119) aller Phasen übereinander und parallel zueinander voneinander isoliert im Gehäuse angeordnet sind, und daß an wenigstens einer der beiden Längskanten senkrecht zur jeweiligen Flachbandleiterebene abgebogene Anschlußfahnen (114...) vorgesehen sind.

4. Vorrichtung nach Anspruch 1, dadurch gekennzeichnet, daß zwei Phasenschienen (50, 51) mit ihrer Flachbandleiterebene für je eine Phase parallel zueinander nebeneinander angeordnet sind, wogegen die dritte Phasenschiene (57) mit ihrer Flachbandleiterebene senkrecht dazu ausgerichtet ist, und daß die an allen Phasenschienen angebrachten Anschlußfahnen (52, 53, 58) in einer allein gemeinsamen Ebene und ihre Endkanten in einer allen gemeinsamen Linie liegen.

5. Vorrichtung nach einem der vorherigen Ansprüche, dadurch gekennzeichnet, daß die Anschlußfahnen an den Phasenschienen L-förmig ausgebildet sind.

6. Vorrichtung nach dem Oberbegriff des Anspruches 1, dadurch gekennzeichnet, daß die als Flachbandleiter ausgebildeten Phasenschienen (94, 103, 104) parallel zueinander und isoliert voneinander im Gehäuse untergebracht sind, wobei wenigstens zwei der Phasenschienen (103, 104) in einer ersten Ebene liegen, und daß die Anschlußfahnen (95) aller Phasenschienen in einer zweiten Ebene liegen und Ausnehmungen (93) zur Kontaktierung mit an den Installationsgeräten (90) angebrachten Anschlußelementen (92) aufweisen, und daß die Ausnehmungen in den Anschlußfahnen wenigstens zweiter Phasenschienen in einer parallel zur Längserstreckung der Phasenschienen verlaufenden ersten Linie liegen.

7. Vorrichtung nach Anspruch 6, dadurch gekennzeichnet, daß die Öffnungen (93) in den Anschlußfahnen einer dritten Phasenschiene auf einer parallel zur ersten Linie verlaufenden zweiten Linie liegen.

8. Vorrichtung nach einem der vorherigen Ansprüche, dadurch gekennzeichnet, daß das Gehäuse (110) im Querschnitt eine Rechteckform aufweist und in Längsrichtung verlaufende, eine Hutprofilschiene bildende L-förmige Leisten (123, 124) besitzt.

9. Vorrichtung nach einem der Ansprüche 1 bis 7, dadurch gekennzeichnet, daß das Gehäuse (10) aus isolierendem Material eine L-Form aufweist, wobei ein Abschnitt (11) die Phasenschienen enthält und der andere Abschnitt (12) Leisten (13, 14) trägt, die miteinander eine Hutprofilschiene bilden.

10. Vorrichtung nach einem der vorherigen Ansprüche, dadurch gekennzeichnet, daß das Gehäuse (10) auf der Seite, auf der sich die Leisten (13, 14) zur Bildung der Hutprofilschiene befinden, Öffnungen (19, 20...) aufweist, durch die die Anschlußfahnen zugänglich sind.

11. Vorrichtung nach einem der vorherigen Ansprüche, dadurch gekennzeichnet, daß das Gehäuse (70) eine U-Form aufweist, wobei die Schenkelabschnitte (70, 72) die Phasenschienen aufnehmen und mit Öffnungen (76, 77) versehen sind, durch die Zugang zu den Phasenschienen gewährt ist.

12. Vorrichtung nach Anspruch 11, dadurch gekennzeichnet, daß an der Außenseite des die beiden Schenkelabschnitte (71, 72) des Gehäuses (70) miteinander verbindenden Steges (73) Leisten (74, 75) vorgesehen sind, die als Hutprofilschiene dienen.

13. Vorrichtung nach einem der vorherigen Ansprüche, dadurch gekennzeichnet, daß am Installationsgerät im Bodenbereich Anschlußelemente (25, 92) vorgesehen sind, die in die Öffnungen einfügbar und mittels denen eine elektrisch leitende Verbindung an den Anschlußfahnen einsteckbar sind herstellbar ist.

14. Vorrichtung nach einem der vorherigen Ansprüche, dadurch gekennzeichnet, daß die Anschlußelemente (25) zwei in Abstand der Phasenleiterdicke einander zugeordnete Fahnenelemente aufweist, die bei Kontaktierung mit den Phasenschienen die Anschlußfahnen an den Phasenschienen zwischen sich nehmen.

15. Vorrichtung nach einem der vorherigen Ansprüche, dadurch gekennzeichnet, daß die Anschlußelemente (92) an den Installationsgeräten durch eine V-förmige Anschlußfahne (92) gebildet sind, die in die Öffnungen an den rechteckförmigen Anschlußfahnen der Flachbandleiter einsteckbar sind.

16. Vorrichtung nach einem der vorherigen Ansprüche, dadurch gekennzeichnet, daß parallel zu den Anschlußfahnen den Phasenleitern eine vierte Phasenschiene (42, 132) zugeordnet ist und die in einem Abstand von den Anschlußfahnen verläuft.

## Claims

1. Apparatus for supplying electrical power to at least one electrical service appliance (15, 16; 85, 184) in a service system, preferably in a domestic service system, having phase busbars (30, 31, 38; 50, 51, 57; 117, 118, 119) which are assigned to the individual phases, are designed as flat strip conductors, are provided with connecting tabs (32, 33, 35; 56, 54; 114, 115, 116; 129, 130, 131) provided on at least one longitudinal edge and can be connected phase-by-phase to at least one of the service appliances (15, 16; 85, 184) which is associated with the respective phase, the individual phase busbars (30, 31, 38; 50, 51, 57; 117, 118, 119) being accommodated in a housing (10, 70, 110) or block composed of insulating material, characterized in that the phase busbars (30, 31, 38; 50, 51, 57; 117, 118, 119), which are designed as flat strip conductors, of at least two phases are arranged parallel to one another, one above the other on two different planes and insulated from one another in the housing (10, 70, 110), in that the connecting tabs (32, 33, 35; 56, 54; 114, 115, 116; 129, 130, 131) of all the phase busbars lie on a common plane and their free end edges lie on a common line, openings (19, 20, ...) being provided in the housing, through which connecting elements (25, 26) which are fitted on the service appliances (15, 16; 85, 184) gain access to the connecting tabs (32, 33, 35; 56, 54; 114, 115, 116; 129, 130, 131).

2. Apparatus according to Claim 1, characterized in that a first phase busbar and a second phase busbar are arranged one above the other on two planes, and the third phase busbar is arranged on the plane of the first phase busbar or of the second phase busbar.

3. Apparatus according to Claim 1, characterized in that the phase busbars (117, 118, 119), which are designed as flat strip conductors, of all the phases are arranged one above the other and parallel to one another, insulated from one another, in the housing, and in that connecting tabs (114...), which are bent at right angles to the respective flat-strip conductor plane, are provided on at least one of the two longitudinal edges.

4. Apparatus according to Claim 1, characterized in that two phase busbars (50, 51) are arranged with their flat strip conductor plane for in each case one phase parallel to one another and alongside one another, while in contrast the third phase busbar (57) is aligned with its flat strip conductor plane at right angles thereto, and in that the connecting tabs (52, 53, 58) which are fitted to all the phase busbars lie on a plane which is alone [sic], and their end edges lie on a line which is common to all.

5. Apparatus according to one of the preceding claims, characterized in that the connecting tabs on the phase busbars are designed in an L-shape.

6. Apparatus according to the precharacterizing clause of Claim 1, characterized in that the phase busbars (94, 103, 104), which are designed as flat strip conductors, are accommodated parallel to one another and insulated from one another in the housing, at least two of the phase busbars (103, 104) lying on a first plane, and in that the connecting tabs (95) of all the phase busbars lie on a second plane and have recesses (93) for making contact with connecting elements (92) which are fitted to the service appliances (90), and that the recesses in the connecting tabs of at least two phase busbars lie on a first line which runs parallel to the longitudinal extent of the phase busbars.

7. Apparatus according to Claim 6, characterized in that the openings (93) in the connecting tabs of a third phase busbar lie on a second line running parallel to the first line.

8. Apparatus according to one of the preceding claims, characterized in that the cross-section of the housing (110) is rectangular and has L-shaped strips (123, 124) which run in the longitudinal direction and form a top-hat rail.

9. Apparatus according to one of Claims 1 to 7, characterized in that the housing (10) composed of insulating material has an L-shape, one section (11) containing the phase busbars and the other section (12) being fitted with strips (13, 14) which form the top-hat rail with one another.

10. Apparatus according to one of the preceding claims, characterized in that the housing (10) has openings (19, 20...) on the side on which the strips (13, 14) to form the top-hat rail are located, through which openings (19, 20...) the connecting tabs are accessible.

11. Apparatus according to one of the preceding claims, characterized in that the housing (70) has a U-shape, the limb sections (70, 72) accommodating the phase busbars and being provided with openings (76, 77) through which access to the phase busbars is ensured.

12. Apparatus according to Claim 11, characterized in that strips, which are used as a top-hat rail, are provided on the outside of the web (73) which connects the two limb sections (71, 72) of the housing (70) to one another.

13. Apparatus according to one of the preceding claims, characterized in that connecting elements (25, 92) are provided in the base region on the service appliance, which connecting elements (25, 92) can be inserted into the openings and by means of which an electrically conductive connection on [sic] the connecting tabs, are insertable [sic], can be produced.

14. Apparatus according to one of the preceding claims, characterized in that the connecting elements (25) has [sic] two tab elements which are assigned to one another with a separation corresponding to the phase conductor thickness and, when making contact with the phase busbars, hold the connecting tabs on the phase busbars between them.

15. Apparatus according to one of the preceding claims, characterized in that the connecting elements (92) on the service appliances are formed by a V-shaped connecting tab (92) and can be inserted into the openings on the rectangular connecting tabs of the flat strip conductors.

16. Apparatus according to one of the preceding claims, characterized in that a fourth phase busbar (42, 132) is assigned to the phase conductors, parallel to the connecting tabs, and runs at a distance from the connecting tabs.

## Revendications

1. Dispositif pour alimenter en énergie électrique au moins un appareil d'installation électrique (15, 16; 85, 184) dans une installation électrique, de préférence une installation domestique, comprenant des barres de phases (30, 31, 38; 50, 51, 57; 117, 118, 119) associées aux différentes phases, réalisé sous forme de conducteurs plats et muni de pattes de connexion (32, 33, 35; 56, 54; 114, 115, 116; 129, 130, 131) sur au moins une arête longitudinale, barres qui peuvent être reliées par phase à au moins l'un des appareils d'installation (15, 16; 85, 184) correspondant à la phase respective, les différentes barres de phases (30, 31, 38; 50, 51, 57; 117, 118, 119) étant disposées dans un boîtier (10, 70, 110) ou bloc en matière isolante, caractérisé par le fait que les barres de phases (30, 31, 38; 50, 51, 57, 117, 118, 119) d'au moins deux phases sont disposées parallèlement entre elles, l'une au-dessus de l'autre en deux plans différents et en étant isolées l'une de l'autre dans le boîtier (10, 70, 110), que les pattes de connexion (32, 33, 35; 56, 54; 114, 115, 116; 129, 130, 131) de toutes les barres de phases sont situées dans un plan commun et leurs arêtes terminales libres sont situées sur une ligne commune, des ouvertures (19, 20, ...) étant prévues dans le boîtier pour permettre l'accès d'éléments de connexion (25, 26) disposés sur les appareils d'installation (15, 16; 85, 184), aux pattes de connexion (32, 33, 35; 56, 54; 114, 115, 116; 129, 130, 131).

2. Dispositif suivant la revendication 1, caractérisé par le fait qu'une première et une deuxième barres de phases sont disposées l'une au-dessus de l'autre dans deux plans et la troisième barre de phase est disposée dans le plan de la première ou de la deuxième barre de phase.

3. Dispositif suivant la revendication 1, caractérisé par le fait que les barres de phases (117, 118, 119) de toutes les phases, réalisées sous forme de conducteurs plats, sont disposées les unes au-dessus des autres et parallèlement entre elles en étant isolées les unes des autres dans le boîtier et que sur au moins l'une des deux arêtes longitudinales sont prévues des pattes de connexion (114 ...) coudées perpendiculairement au plan des conducteurs plats.

4. Dispositif suivant la revendication 1, caractérisé par le fait que deux barres de phases (50, 51) en forme de conducteurs plats sont disposées dans des plans parallèles en étant disposées l'une au-dessus de l'autre, tandis que la troisième barre de phase (57) en forme de conducteur plat est disposée dans un plan perpendiculaire auxdits plans et que les pattes de connexion (52, 53, 58) disposées sur toutes les barres de phases sont situées dans un unique plan commun et leurs arêtes terminales sont situées sur une unique ligne commune.

5. Dispositif suivant l'une des revendications précédentes, caractérisé par le fait que les pattes de connexion sur les barres de phases sont réalisées en L.

6. Dispositif suivant le préambule de la revendication 1, caractérisé par le fait que les barres de phases (94, 103, 104) réalisées sous forme de conducteurs plats sont disposées parallèlement entre elles et en étant mutuellement isolées dans le boîtier, au moins deux des barres de phases (103, 104) étant situées dans un premier plan, et que les pattes de connexion de toutes les barres de phases sont situées dans un deuxième plan et présentent des évidements (93) pour le contact avec des éléments de connexion (92) disposés sur les appareils d'installation (90), et que les évidements sur les pattes de connexion d'au moins deux barres de phases sont situés sur une première ligne s'étendant parallèlement à la longueur des barres de phases.

7. Dispositif suivant la revendication 6, caractérisé par le fait que les ouvertures (93) sur les pattes de connexion d'une troisième barre de phase sont situées sur une deuxième ligne parallèle à la première ligne.

8. Dispositif suivant l'une des revendications précédentes, caractérisé par le fait que le boîtier (110) présente en section une forme rectangulaire et possède des barrettes (123, 124) en L, s'étendant dans la direction longitudinale et constituant un rail en oméga.

9. Dispositif suivant l'une des revendications 1 à 7, caractérisé par le fait que le boîtier (10) en matière isolante présente une forme en L, une aile (11) contenant les barres de phases et l'autre aile (12) portant des barrettes (13, 14) formant ensemble un rail en oméga.

10. Dispositif suivant l'une des revendications précédentes, caractérisé par le fait que le boîtier (10) présente sur le côté sur lequel se trouvent les barrettes (13, 14) constituant le rail en oméga, des ouvertures (19, 20 ...) permettant l'accès aux pattes de connexion.

11. Dispositif suivant l'une des revendications précédentes, caractérisé par le fait que le boîtier (70) présente une forme en U, les ailes (70, 72) recevant les barres de phases et étant munies d'ouvertures (76, 77) permettant l'accès aux barres de phases.

12. Dispositif suivant la revendication 11, caractérisé par le fait que des barrettes (74, 75) servant de rail en oméga sont prévues sur le côté extérieur de l'âme (73) reliant entre elles les deux ailes (71, 72) du boîtier (70).

13. Dispositif suivant l'une des revendications précédentes, caractérisé par le fait que l'appareil d'installation comporte, dans la zone du fond, des éléments de connexion (25, 92) qui peuvent être insérés dans les ouvertures et à l'aide desquels une liaison électriquement conductrice peut être établie par enfichage avec les pattes de connexion.

14. Dispositif suivant l'une des revendications précédentes, caractérisé par le fait que les éléments de connexion (25) présentent deux éléments de pattes disposés l'un par rapport à l'autre à une distance correspondant à l'épaisseur des conducteurs de phases, ces éléments de pattes recevant entre eux les pattes de connexion des barres de phases lors de l'établissement du contact avec ces dernières.

15. Dispositif suivant l'une des revendications précédentes, caractérisé par le fait que les éléments de connexion (92) sur les appareils d'installation sont constitués par des pattes de connexion (92) en V qui peuvent être insérées dans les ouvertures prévues sur les pattes de connexion rectangulaires des conducteurs plats.

16. Dispositif suivant l'une des revendications précédentes, caractérisé par le fait qu'une quatrième barre de phase (42, 132) est disposée parallèlement aux pattes de connexion des conducteurs de phases et s'étend à distance des pattes de connexion.
